# EUROPEAN PATENT APPLICATION

(11) **EP 2 529 615 A2**
(43) Date of publication of application: **05.12.2012**
(21) Application number: 11737264.9
(22) Date of filing: 24.01.2011
(51) Int. Cl.: A01G 1/00, A01G 9/02, A01G 27/02, E02B 3/08, E02D 17/20

(54) **VERTICAL WALL AND HIGH-SLOPE AFFORESTATION METHOD AND AGGREGATE CONTAINER, SHELF ASSEMBLY AND WATER SUPPLY DEVICE USED THERETO**

(30) Priority: 28.09.2010 KR 20100093731; 27.08.2010 KR 20100008973 U; 29.01.2010 KR 20100008613
(71) Applicant: Daesan L & C, Seocho-gu, Seoul 137-132 (KR); Green Infra Co., Ltd., Seocho-gu Seoul (KR)
(72) Inventor: PARK, Chul-Hong, Seoul 137-070 (KR); KIM, Jae-Hong, Seoul 133-121 (KR)
(74) Representative: Gulde Hengelhaupt Ziebig & Schneider
(86) International application number: PCT/KR2011/000487
(87) International publication number: WO 2011/093625

(57) **Abstract**

Disclosed is a method for foresting a vertical wall and a highly-inclined surface and an aggregate container, a shelf assembly, and a water supply apparatus used for the method. The shelf assembly (10) includes a support unit (12) and a support plate (20). The support unit (12) has a fixing leg (14) fixed to a reinforcement soil layer (3), and a load support unit (16) is positioned at the front end of the fixing leg (14) and is forced against and supported on a vertical wall (7) or an inclined surface at the front end of the reinforcement soil layer (3). The load support unit (16) has a support leg (18) extending from its front end to be inclined in the opposite gravitational direction. The support plate (20) is supported on the support leg (18), and vegetation soil (40) is placed on the support plate (20). A horizontal supply tube (36) is positioned inside the vegetation soil (40) with both ends connected to vertical supply tubes (30), which have a predetermined interval between them. Water supply tubes (38) are installed on the horizontal supply tube (36). The water supply tubes (38) are filled with a filler (38), and pressure-reduction valves (37') are installed on connection tubes (37), which connect the water supply tubes (38) and the horizontal supply tube (36). The shelf assembly (10) can support the load of the vegetation soil (40) more efficiently, and water is supplied into the vegetation soil (40) more effectively.

## Description

### Technical Field

The present invention relates to a method of foresting a vertical wall and a highly-inclined surface, and an aggregate container, a shelf assembly, and a water supply apparatus used for the method, and more particularly, to a method of foresting highly-inclined surfaces or various types of vertical walls, which result from ground-cutting or mounding, and an aggregate container, a shelf assembly, and a water supply apparatus used for the method.

### Background Art

When a sloped surface is created by ground-cutting or mounding conducted near a road or a stream, the sloped surface is commonly stabilized and forested to prevent any accident resulting from loss and collapse of soil and to improve the appearance.

There also have been recent attempts to forest various types of vertical walls to make them environmentally friendly. Examples of such vertical walls include a vertical wall obtained by making a sloped surface, which has been created by ground-cutting or mounding, perpendicular to the ground, a wall surface of a large building, etc.

Various methods for foresting sloped surfaces have been proposed. For example, Korean Registered Patent No. 10-0419883 discloses a method of foresting sloped surfaces using reinforcement soil, wherein, when a sloped surface resulting from ground-cutting or mounding is to be forested, a mounding layer is formed using a frame, which is moved forwards after the mounding layer is formed so that a vegetation soil layer is formed between the frame and the front end of the mounding layer.

However, this type of method has a problem in that the surface of the vegetation soil layer faces only upwards with regard to the ground, and plants accordingly grow from the vegetation soil layer upwards with regard to the ground. This means that, when the sloped surface is viewed by people on the ground, they can see not only plants growing from the slope, but also a considerable part of a surface of the frame, seriously degrading the degree of forestation.

The conventional method also has a problem in that, since the vegetation soil layer is seen facing upwards with regard to the ground, it is applicable only to sloped surfaces having an acute-angle inclination, not to vertical walls.

Furthermore, the prior art does not have a structure for continuously supplying water to plants growing on the sloped surface, but solely relies on natural rainfalls, reducing the possibility that the plants will survive after forestation.

Meanwhile, when a number of reinforcement soil layers are stacked on a ground-cutting portion or a mounded portion to form a vertical or inclined wall, formation of the reinforcement soil layers using nothing but soil degrades water drainage. Particularly, if soil is lost from the front end of a reinforcement soil layer due to rainfall, for example, the vertical or inclined wall is easily damaged.

In addition, the front end of each reinforcement soil layer is to be compacted by a manual labor using small equipment, not large compaction equipment, so that use of aggregates is unavoidable to secure a predetermined degree of compaction.

Therefore, the present applicant has developed a method of forming a water-permeable portion at the front end of a vertical or inclined wall formed on a ground-cutting portion or a mounded portion. When a water-permeable portion is formed at the front end of a reinforcement soil layer by a predetermined width, it is preferred to make a clear distinction between a soil portion, where soil exists, and a water-permeable portion, where aggregates exist.

However, aggregates have weaker adhesion to each other, compared with soil, and are not clearly distinguished from the soil portion, making it very difficult to form a water-permeable portion. As a result, a lot of aggregates are mixed with the soil portion, requiring use of more aggregates than specified by the design.

### Disclosure

### Technical Problem

Therefore, the present invention has been made in view of the above-mentioned problems, and an aspect of the present invention is to provide a foresting method enabling plants to grow in the forward direction of a high-inclined surface or a vertical wall so that the majority of the surface area of the highly-inclined surface or the vertical wall is forested.

Another aspect of the present invention is to provide a foresting method capable of collecting natural rainfalls and supplying plants with water for a relatively long period of time.

Another aspect of the present invention is to provide a shelf assembly installed on a highly-inclined surface or a vertical wall so that plants can grow in the forward direction of the highly-inclined surface or the vertical wall.

Another aspect of the present invention is to provide a water supply apparatus capable of collecting natural rainfalls and supplying plants with water for a relatively long period of time.

Another aspect of the present invention is to form a vertical or inclined wall on a ground-cutting portion or a mounded portion in such a manner that a water-permeable portion is formed at the front end of a reinforcement soil layer to be clearly distinguished from a soil portion.

### Technical solution

In accordance with an aspect of the present invention, there is provided a shelf assembly including at least one pair of support units including fixing legs fixed to a reinforcement soil layer, load support units extending from front ends of the fixing legs in a gravitational direction to be forced against a vertical wall or an inclined surface, and support legs extending from front ends of the load support units to support a support plate; and a support plate supported on the support legs of the support units, vegetation soil being seated on the support plate, wherein interference avoidance portions are formed by cutting out portions of both ends of the support plate, and the support plate is corrugated in a direction perpendicular to a direction of connection between the support units.

In accordance with another aspect of the present invention, there is provided a method of foresting a vertical wall and a highly-inclined surface, including the steps of fixing a vertical plate by fixing a support unit of a shelf assembly in a position corresponding to a front end of a reinforcement soil layer to be formed and installing a vertical plate to be supported by a support rod extending through a rod through-hole of a rod installation unit formed on the support unit; forming a reinforcement soil layer so that a portion, on which the vertical plate has been installed, becomes a front end of the reinforcement soil layer; seating a support plate on a support leg of the support unit after the reinforcement soil layer is formed; and placing vegetation soil on the support plate so that plants can grow.

In accordance with another aspect of the present invention, there is provided a water supply apparatus for a method of foresting a vertical wall and a highly-inclined surface by forming a number of reinforcement soil layers, installing a shelf assembly including a support unit and a support plate at a vertical wall or a highly-inclined surface formed at front ends of the reinforcement soil layers, and placing vegetation soil on the support plate, the water supply apparatus including a pair of vertical supply tubes installed inside the vegetation soil at a predetermined interval in a vertical direction and adapted to receive water from a water supply unit; a horizontal supply tube installed in a horizontal direction with both ends connected to inclined portions of branch tubes provided on the vertical supply tubes on both sides, respectively, so as to receive water through the vertical supply tubes; a number of water supply tubes installed on the horizontal supply tube in a position below the horizontal supply tube in a gravitational direction and adapted to supply the vegetation soil with water through dripping holes; and pressure-reduction valves adapted to reduce pressure of water delivered to the water supply tubes below a predetermined value.

In accordance with another aspect of the present invention, there is provided a shelf assembly including at least one pair of support units including fixing legs having fixing pins inserted into a reinforcement soil layer to be fixed to the reinforcement soil layer, load support units extending from front ends of the fixing legs in a gravitational direction to be forced against a vertical wall or an inclined surface, and support legs extending from front ends of the load support units to support a support plate; and a support plate supported on the support legs of the support units, vegetation soil being seated on the support plate, wherein the fixing pins are inserted into the reinforcement soil layer by extending from front ends of pin connection portions, which extend from the fixing legs in such directions that the pin connection portions become far from each other, in a direction perpendicular to a direction of extension of the pin connection portions.

In accordance with another aspect of the present invention, there is provided a method of foresting a vertical wall and a highly-inclined surface, including the steps of installing a support rod by installing a support unit of a shelf assembly and a support rod fixing unit in a position corresponding to a front end of a reinforcement soil layer to be formed; fixing a first vertical plate by installing the first vertical plate using the support rod and the support rod fixing unit; installing a reinforcement material by spreading the reinforcement material, after fixing the first vertical plate, so that a front end of the reinforcement material straddles the first vertical plate; installing a second vertical plate to be connected to the first vertical plate; forming a reinforcement soil layer so that a water-permeable portion is formed between the first and second vertical plates and the second vertical plate becomes a front end of the reinforcement soil layer; seating a support plate on a support leg of the support unit after the reinforcement soil layer is formed; and placing vegetation soil on the support plate so that plants can grow.

In accordance with another aspect of the present invention, there is provided a support plate for a shelf assembly, including a support plate body having a leftward/rightward length larger than a forward/backward width, the support plate body having protrusions and recesses extending in a longitudinal direction, the protrusions and recesses being positioned alternately in the forward/backward width direction; an overlapping stepped portion formed on an end of the support plate body so as to have a height difference corresponding to a thickness of the support plate body so that adjacent support body plates can be overlapped; and an engaging rib formed on a lower surface of the support plate body so as to fix a second end of a geogrid or a mesh, which has a first end fixed to a front end of an underlying support plate body.

In accordance with another aspect of the present invention, there is provided an aggregate container including a body having an aggregate space formed inside the body to be open upwards/downwards; at least two pairs of connection engagement units positioned on both sides of an upper end of the body so as to face each other; and a bottom plate removably installed below the aggregate space of the body to seal a lower portion of the aggregate space and provided with hooks so that wires or ropes are tied to the hooks to separate the bottom plate from the body plate.

In accordance with another aspect of the present invention, there is provided a method of forming a water-permeable portion constituting a reinforcement soil layer using an aggregate container having an aggregate space formed in a body, which forms a framework, to be open upwards/downwards and a bottom plate removably installed below the body to seal a lower portion of the aggregate space, the method including the steps of spreading a reinforcement material on a bottom and installing a front molding frame at a front end; positioning an aggregate container, which is filled with aggregates, adjacent to the front molding frame; separating the bottom plate from the body of the aggregate container; placing soil at a location on the reinforcement material except for a portion on which the body is positioned; separating the body from between the front molding frame and the soil; covering the aggregates, including a part of the soil, with the reinforcement material; and compacting the soil and aggregates.

### Advantageous Effects

The method for foresting a vertical wall and a highly-inclined surface according to the present invention, and the aggregate container, the shelf assembly, and the water supply apparatus used for the method, which have the above-mentioned construction, have the following advantages:

According to the present invention, a highly-inclined surface or a vertical wall can be forested almost 100% so that the highly-inclined surface or vertical wall has an aesthetic appearance in harmony with surroundings.

The present invention employs a water supply apparatus adapted to use natural rainfalls and supply vegetation soil for forestation with water. Therefore, plants for forestation are supplied with water efficiently and thus can grow healthier, maintaining a better forestation condition.

Particularly, the support plate according to the present invention has a support plate body, which forms its framework, and which has a leftward/rightward length larger than its forward/backward width. The support plate body also has a concave/convex structure, i.e. it has concave and convex portions elongated in the leftward/rightward direction. This structure reinforces the strength so that the load of vegetation soil can be supported sufficiently.

The support plate according to the present invention has an overlapping stepped portion formed on an end so that adjacent ones can be overlapped at the overlapping stepped portions on one side. This guarantees that, when a number of support plates are connected continuously in the leftward/rightward direction, the overall height remains constant, even if the ends are overlapped, so that the vegetation soil remains supported.

The support plate according to the present invention is provided with an upper end fastening slot and a lower end fastening slot so that a mesh or a geogrid can be installed between support plates installed vertically at a predetermined interval. This can surely prevent the vegetation soil from falling.

The support plate according to the present invention has a number of irrigation through-holes so that vertical supply tubes can continuously supply water to vegetation soil on support plates, which are installed vertically at a predetermined interval.

The support plate body of the support plate according to the present invention is provided with protrusions and recesses so that the lower portion of vegetation soil rests in the recesses, preventing the entire vegetation soil from easily moving.

The aggregate container according to the present invention can be moved while containing aggregates therein so that aggregates can be easily conveyed to the construction site, and the conveyed aggregates can be directly supplied to the location, at which a vertical wall is to be formed, without transferring the aggregates to another container. This facilitates the process of forming a water-permeable portion.

The aggregate container according to the present invention has a separable bottom plate so that, by placing it at the location where a water-permeable portion is to be formed, removing the bottom plate, and lifting the container body, the aggregates are left at the location where a water-permeable portion is to be formed. This makes formation of a water-permeable portion easier and more accurate.

### Brief Description of the Drawings

FIG. 1 is a sectional view of a vertical wall of a mounding layer constructed by a method of foresting a sloped surface according to a preferred embodiment of the present invention;
FIG. 2 is a lateral and top view of a support unit constituting a shelf assembly according to an embodiment of the present invention;
FIG. 3 is a lateral and top view of a support plate constituting a shelf assembly according to an embodiment of the present invention;
FIG. 4(a) is a perspective view of a frame according to an embodiment of the present invention;
FIG. 4(b) is a top view showing the construction of a water supply unit according to an embodiment of the present invention;
FIG. 5 illustrates a schematic construction of a water supply apparatus according to an embodiment of the present invention;
FIG. 6 is a work status diagram illustrating a process of forming a reinforcement soil layer during a forestation method according to an embodiment of the present invention;
FIG. 7 is a perspective view of a support unit constituting a shelf assembly according to another embodiment of the present invention;
FIG. 8 is a perspective view illustrating the construction of a support rod fixing unit used to form a reinforcement soil layer using the support unit shown in FIG. 7;
FIG. 9 is a schematic perspective view illustrating fixation of first and second vertical plates using the support unit and the support rod fixing unit shown in FIGs. 7 and 8;
FIG. 10 is a work status diagram illustrating successive processes of forming a reinforcement soil layer using the support unit of FIG. 7;
FIG. 11 is a perspective view illustrating the construction of a support plate according to an embodiment of the present invention;
FIG. 12 is a top view illustrating the construction of the support plate of FIG. 11;
FIG. 13 is a bottom view illustrating the construction of the support plate of FIG. 11;
FIG. 14 is a lateral view illustrating the construction of the support plate of FIG. 11;
FIG. 15 is a front view illustrating the construction of the support plate of FIG. 11;
FIG. 16 is a perspective view illustrating the construction of an aggregate container according to a preferred embodiment of the present invention;
FIG. 17 is an exploded perspective view illustrating the construction of an aggregate container according to an embodiment of the present invention;
FIG. 18 is a sectional view illustrating the construction of an aggregate container according to an embodiment of the present invention; and
FIG. 19 is a work status diagram illustrating formation of a water-permeable portion using an aggregate container according to an embodiment of the present invention.

### Mode for Carrying Out the Invention

Hereinafter, a method of foresting a vertical wall and a highly-inclined surface and a shelf assembly and a water supply apparatus used for the method, according to a preferred embodiment of the present invention, will be described in detail with reference to the accompanying drawings.

As shown in the drawings, a rubble base 1' is generally formed on the ground surface 1, and reinforcement soil layers 3 of a predetermined thickness are successively formed thereon so that the front ends of the reinforcement soil layers 3 constitute a vertical wall 7 or an inclined surface. For reference, the rubble base 1' is formed in a position corresponding to the front end of each reinforcement soil layer 3. A water-permeable portion 3' is formed at the front end of each reinforcement soil layer 3, which corresponds to the rubble base 1'. The water-permeable portion 3' is made of the same material as the rubble base 1', e.g. gravel, to facilitate water drainage.

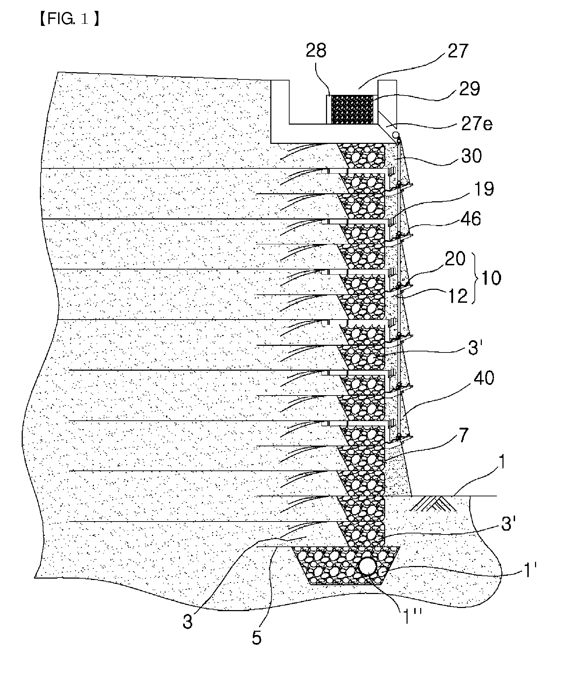

The reinforcement soil layers 3 do not necessarily start from the same height as the ground surface 1, meaning that, as shown in FIG. 1, the reinforcement soil layers 3 can start from below the ground surface 1. In this case, the rubble base 1' is positioned lower than the ground surface 1. A transverse drainage perforated tube 1" can be installed in the rubble base 1' to drain water delivered to the rubble base 1'.

FIG. 1 shows a vertical wall 7 formed on a mounded portion. When the vertical wall 7 is formed, a reinforcement material 5 is used between the reinforcement soil layers 3 of a predetermined depth. The reinforcement material 5 can be a fibrous material having a dense lattice shape, which enables roots of plants to interconnect vegetation soil 40 and the reinforcement soil layers 3 so that the forested portion and the reinforcement soil layers 3 are integrated with each other, and which has biological and chemical resistance enough to prevent soil loss during construction.

The purpose of using the reinforcement material 5 is to make each reinforcement soil layer 3 formed more firmly. Particularly, the reinforcement material 5 is made to protrude further than the front ends of the reinforcement soil layers 3. When a reinforcement soil layer 3 is completed, the front end of the reinforcement material 5 is seated on the upper surface of the front end of the completed reinforcement soil layer 3 so that the reinforcement material 5 surrounds the front end of the completed reinforcement soil layer 3. A vertical wall 7 can be formed on a mounded portion in this manner.

It is to be noted that, when the reinforcement soil layers 3 are formed, an inclined surface having a predetermined inclination can be formed instead of the vertical wall 7. In this case, the reinforcement soil layers 3 are formed so that the front end of each reinforcement soil layer 3 is slightly retracted from the front end of the underlying reinforcement soil layer 3.

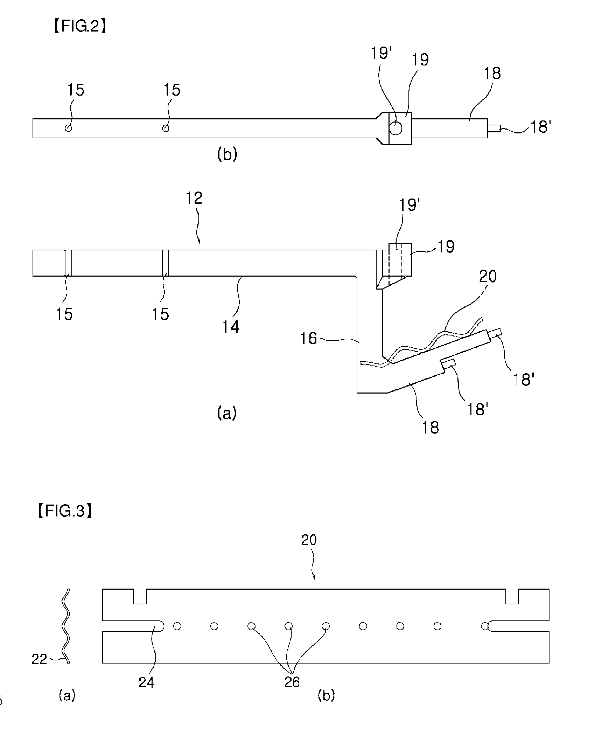

A shelf assembly 10 is used, in the process of forming the reinforcement soil layers 3, to guarantee formation of front ends of the reinforcement soil layers 3. The construction of the shelf assembly 10 will now be described with reference to FIGs. 2 and 3. The shelf assembly 10 is adapted to guarantee proper formation of reinforcement soil layers 3 and support and position vegetation soil 40, which is used for forestation, on the vertical wall 7 or inclined surface.

The shelf assembly 10 includes a support unit 12 fixed to the vertical wall 7 and a support plate 20 coupled to the support unit 12 to support the vegetation soil 40.

The support unit 12 has a fixing leg 14 having the shape of a bar of a predetermined length. The fixing leg 14 has through-holes 15 formed at a predetermined interval. According to the present embodiment, two through-holes 15 are formed at a predetermined interval in the longitudinal direction of the fixing leg 14. Fasteners (given no reference numeral) extend through the through-holes 15 to be stuck in the reinforcement soil layers 3.

The fixing leg 14 has a load support unit 16 at its front end. The load support unit 16 is, in the case of a vertical wall 7, perpendicular to the fixing leg 14 and, in the case of an inclined surface, has an inclination corresponding to the inclination of the inclined surface. The load support unit 16 is forced against the vertical wall 7 to support a load, which is applied to the support plate 20 (described later), at the front end of the reinforcement soil layer 3.

The load support unit 16 has a support leg 18 formed at its front end. The support leg 18 extends from the load support unit 16 by a predetermined length, and is inclined so that it becomes higher towards the front end. The support plate 20 is seated and supported on the support leg 18. The support leg 18 has an inclination angle of about 20º. The support leg 18 has fixing protrusions 18' formed on its front end and on its middle lower portion, respectively. The fixing protrusions 18' are adapted to fix a geogrid or a mesh 46 (refer to FIG. 1), which prevents the vegetation soil 40 from falling out of the support plate 20. The fixing protrusions 18' on the front end and middle lower portion of the support leg 18 have a small distance difference, and extend in the same direction as that of the support leg 18.

The fixing leg 14 has a rod installation portion 19 formed at its front end. A rod through-hole 19' extends through the rod installation portion 19 in the same direction of extension of the load support unit 16. A support rod 42 is inserted and installed into the rod through-hole 19' to support a vertical plate 44 for forming a reinforcement soil layer 3. The support rod 42 extends through the rod through-hole 19' so that its front end is supported on the support leg 18.

According to the present embodiment, at least two support units 12 constitute a pair and support the support plate 20. Instead of the bar-shaped fixing legs 14, plate-shaped members can be used to integrally connect two support units 12. Alternatively, fixing legs 14 of two support units 12 can be connected to each other using a single plate-shaped member.

The support plate 20 has a rectangular plate shape, and is corrugated in a direction perpendicular to the direction of connection between the support units 12 so that, when both ends of the support plate 20 are supported by the support units 12, it can maintain strength. The corrugated part of the support plate 20 will be referred to as a corrugated portion 22. Interference avoidance portions 24 are formed along the middle portions of both ends of the support plate 20, respectively. The interference avoidance portions 24 are formed to avoid interference with vertical supply tubes 30 (described later). The support plate 20 has a number of water passage holes 26 formed therein. The water passage holes 26 are adapted to supply water, which has been supplied to vegetation soil 40 seated on the support plate 20, to different vegetation soil 40 beneath the support plate 20. According to the present embodiment, a number of water passage holes 26 are formed in a row at a predetermined interval. However, the water passage holes 26 are not necessarily formed in a row.

According to the present invention, vegetation soil 40 is positioned on each support plate 20. In other words, vegetation soil 40 is positioned in a space between the support plates 20. The vegetation soil 40 needs to be supplied with water, and a construction to this end will now be described.

A water supply unit 27 is positioned at the highest end of the reinforcement soil layers 3. The water supply unit 27 is adapted to collect rainfalls reaching the upper surface of the reinforcement soil layers 3. The water supply unit 27 has the shape of a channel through which collected rainfalls can flow. The water supply unit 27 has an outlet 27e through which water is discharged.

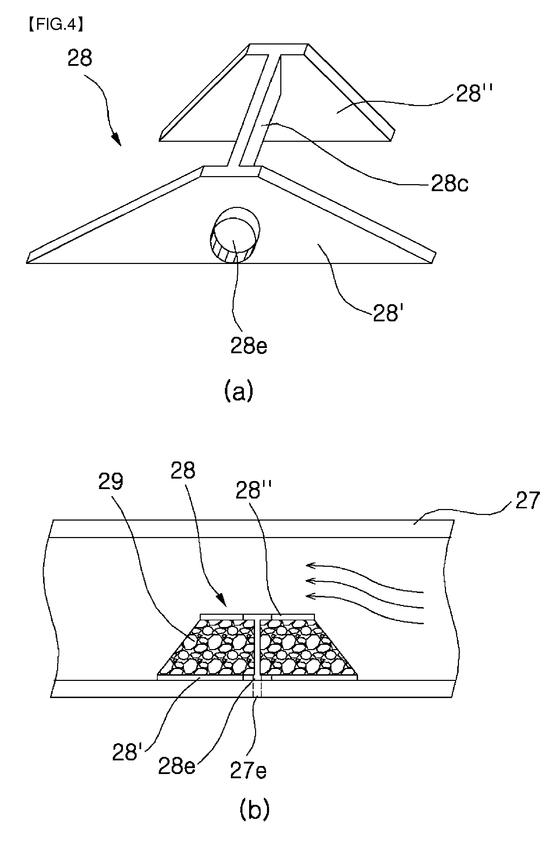

In order to guarantee that only water flows through the outlet 27e, the water supply unit 27 has a supply water-permeable portion 29 formed inside a frame 28, as clearly shown in FIG. 4. The frame 28, as clearly shown in (a) of FIG. 4, includes first and second lateral plates 28' and 28" connected by a connection bar 28c. The first and second lateral plates 28' and 28" have the shape of trapezoidal plates, respectively. However, the shape is not limited to this, and triangular plates can also be used. It is most recommended that the first and second lateral plates 28' and 28" have a downward inclination ranging from their middle portions to both ends.

It is recommended that, among the first and second lateral plates 28' and 28", the first lateral plate 28', which is forced against a lateral wall surface of the water supply unit 27, is longer than the second lateral plate 28" positioned at the center of the water supply unit 27. Particularly, with the connection bar 28c at the center, both ends of the first lateral plate 28' protrude more than both ends of the second lateral plate 28". This is for the purpose of guaranteeing that the supply water-permeable portion 29, which is formed between the first and second lateral plates 28' and 28", is inclined in the water flow direction as it extends from a lateral wall surface of the water supply unit 27 towards the center, so that alien substances can flow easily without accumulating in the supply water-permeable portion 29.

The supply water-permeable portion 29 can be made of water-permeable asphalt concrete, for example. Reference numeral 28e refers to a communication hole, which communicates with the outlet 27e so that water, after passing through the supply water-permeable portion 29, is delivered to a vertical supply tube 30 (described later).

Vertical supply tubes 30 extend a long distance from the top of the vertical wall 7 to its bottom, as shown in FIG. 4, through the interior of the vegetation soil 40. The vertical supply tubes 30 extend through the interference avoidance portions 24 of the support plate 20. A number of vertical supply tubes 30 are provided along the vertical wall 7, and two respective vertical supply tubes 30, which are elongated in the vertical direction, constitute a pair. Each pair of vertical supply tubes 30 has branch tubes 32 installed in intermediate positions. Each branch tube 32 includes a vertical portion 33 and an inclined portion 33'. The vertical portions 33 connect between the vertical supply tubes 30, and the inclined portions 33' connect the vertical supply tubes 30 with horizontal supply tubes 36 (described later) so that water is delivered to the horizontal supply tubes 36.

Guide plates 34 are positioned inside the vertical portions 33 to guide water into the inclined portions 33', respectively. The inclined portions 33' extend in an inclined direction with regard to the vertical portions 33, while front ends of the inclined portions 33' extend horizontally to be connected with the horizontal supply tubes 36.

Both ends of each horizontal supply tube 36 are connected to the pair of vertical supply tubes 30 by the inclined portions 33' of the branch tubes 32, respectively. Therefore, the horizontal supply tubes 36 receive water from the vertical supply tubes 30 on both ends. A number of horizontal supply tubes 36 are positioned near the upper surface of each support plate 20 and are installed to connect the vertical supply tubes 30. The inclined portions 33' of the branch tubes 32, which connect the horizontal supply tubes 36 with the vertical supply tubes 30, are inclined in the downward gravitational direction so that water supplied to the horizontal supply tubes 36 cannot flow back to the vertical supply tubes 30.

Connection tubes 37 connect between the horizontal supply tubes 36 and water supply tubes 38, and pressure-reduction valves 37' are installed on the connection tubes 37, respectively. The pressure-reduction valves 37' are adapted to prevent the pressure of water, which is delivered to the water supply tubes 38, from increasing beyond a predetermined level.

Each horizontal supply tube 36 is provided with a number of water supply tubes 38. The water supply tubes 38 are connected to the horizontal supply tubes 36 via connection tubes 37 and receive water through the horizontal supply tubes 36. The length of water supply tubes 38 installed and connected to each horizontal supply tube 36 is smaller than the length of the horizontal supply tube 36. Such a smaller length of the water supply tubes 38 is for the purpose of preventing a large height difference in the gravitational direction inside the water supply tubes 38. The water supply tubes 38 need to be positioned lower than the horizontal supply tubes 36 in the gravitational direction.

The water supply tubes 38 have a number of dripping holes 38' formed thereon. Water inside the water supply tubes 38 is slowly supplied to the vegetation soil 40 through the dripping holes 38'. The dripping holes 38' are formed in the lowest position inside the water supply tubes 38 in the gravitational direction. The water supply tubes 38 are filled with a filler 38". The filler 38" is adapted to hold water inside the water supply tubes 38 and discharge it slowly, particularly to prevent an abrupt discharge of water through the dripping holes 38'. For reference, both the horizontal supply tubes 36 and the vertical supply tubes 32 can be filled with the filler 38". Examples of the filler 38" include sand and pebbles.

Caps 39 are installed to cover both ends of each water supply tube 38. The caps 39, which cover both ends of each water supply tube 38, have air holes 39'. The air holes 39' are adapted to facilitate a discharge of air out of the water supply tubes 38 and are formed in a relatively high position inside the caps 39 in the gravitational direction.

The vertical supply tubes 30, the horizontal supply tubes 36, and the water supply tubes 38, which are adapted to supply the vegetation soil 40 with water, as described above, constitute a set in the following manner: a pair of vertical supply tubes 30 are installed at a predetermined interval between the interference avoidance portions 24 of each support plate 20, and both ends of a horizontal supply tube 36 are connected to the vertical supply tubes 30. A number of such sets can be installed, as shown in FIG. 4, to supply the vegetation soil 40 with water.

The shelf assemblies 10 are arranged in a row along respective reinforcement soil layers 3. Specifically, a shelf assembly 10 is arranged for each reinforcement soil layer 3 in a row, and vegetation soil 40 is placed on its upper surface. The support plate 20, on which the vegetation soil 40 is placed, defines an obtuse angle with regard to the reinforcement soil layer 3 (reinforcement material 5) so that, when the vertical wall 7 is viewed by people, only the front ends of the support units 22 are visible, and, among the other parts, only the vegetation soil 40 can be seen from the outside. Obviously, plants grow on the vegetation soil 40 through transplantation or sowing, and people can actually see the plants only.

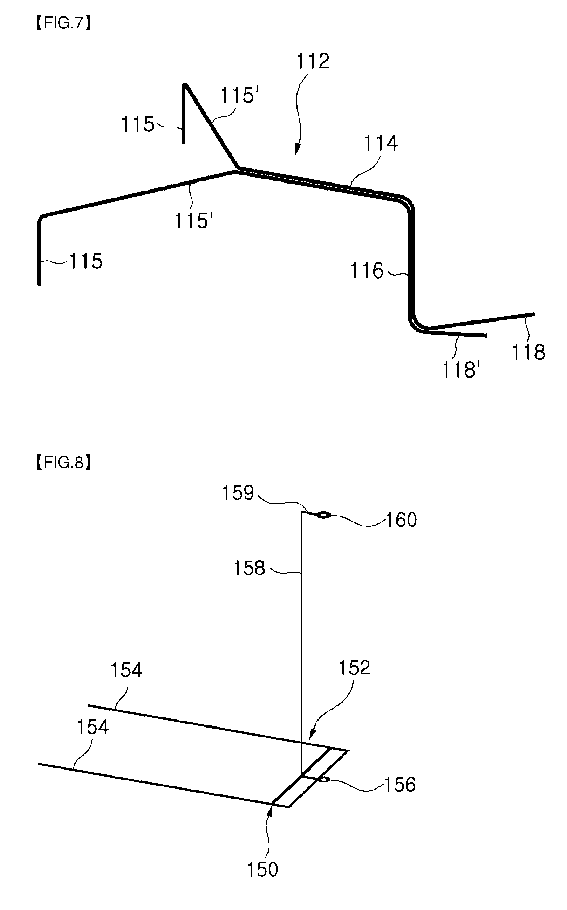

Another embodiment of the support unit, which constitutes the shelf assembly, will now be described with reference to FIG. 7.

The support unit 112 shown in FIG. 7 is obtained by combining two metal rods, e.g. reinforcing bars, and has a fixing leg 114 of a predetermined length. The fixing leg 114 is seated on a pre-fabricated reinforcement soil layer 3. The fixing leg 114 has pin connectors 115' extending from its rear end in different directions. The pin connectors 115' extend in such directions that they become farther from each other, and fixing pins 115 extend from ends of the pin connectors 115' in perpendicular directions, respectively. The fixing pins 115 are inserted into the reinforcement soil layer 3 to fix the support unit 112.

The fixing leg 114 has a load support unit 116 at its front end. The load support unit 116 is, in the case of a vertical wall 7, perpendicular to the fixing leg 114 and, in the case of an inclined surface, has an inclination corresponding to the inclination of the inclined surface. The load support unit 116 is forced against the vertical wall 7 to support a load, which is applied to the support plate 20, at the front end of the reinforcement soil layer 3.

The load support unit 116 has a support leg 118 formed at its front end. The support leg 118 extends from the load support unit 116 by a predetermined length, and is inclined so that it becomes higher towards the front end. The support plate 20 is seated and supported on the support leg 118. The support leg 118 has an inclination angle of about 20º. A connection leg 118' is formed with the same inclination as the support leg 118, but has about half the length of the support leg 118. Both the support leg 118 and the connection leg 118' are adapted to support the support plate 20. The front ends of the connection legs 118' and the support leg 118 are adapted to fix a geogrid or a mesh 46 (refer to FIG. 1), which prevents the vegetation soil 40 from falling out of the support plate 20. The support leg 118 and the connection leg 118' are designed to extend in such directions that the distance increases towards the front ends. This is for the purpose of supporting the support plate 20 more effectively.

When the support unit 112 according to the present embodiment is used, a separate support rod fixing unit 150, as shown in FIG. 8, needs to be used to form a reinforcement soil layer 3. The support rod fixing unit 150 can also be obtained by bending and welding metal rods, such as reinforcing bars.

The framework of the support rod fixing unit 150 is formed by a frame 152. The frame 152 is obtained by connecting a number of metal rods in an approximately U-shaped configuration. A pair of fixing insertion portions 154 is formed on the rear end of the frame 152. The fixing insertion portions 154 are inserted into a reinforcement soil layer 3 to fix the frame 152. The frame 152 has a lower rod support ring 156 at its front end. The lower rod support ring 156 has a ring shape and is adapted to support the lower end side of the support rod 142.

A vertical bar 158 extends from the front end of the frame 152 in the upward vertical direction. A connection portion 159 extends from the upper end of the vertical bar 158 in a direction perpendicular to the direction of extension of the vertical bar 158, and an upper rod support ring 160 is positioned at the front end of the connection portion 159. The upper rod support ring 160 is positioned to be concentric with the lower rod support ring 156.

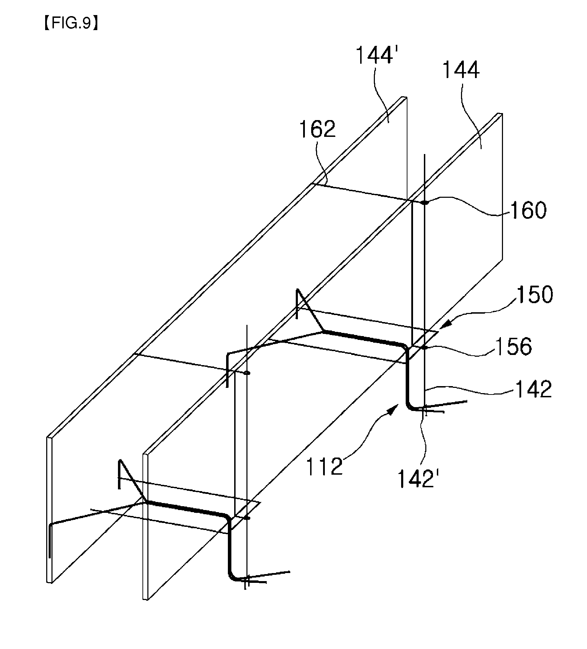

The above-mentioned support rod fixing unit 150 is adapted to support first and second vertical plates 144 and 144', as shown in FIG. 9. The water-permeable portion 3' is formed between the first and second vertical plates 144 and 144'. When a water-permeable portion 3' is formed in this manner, the boundary between the water-permeable portion 3' and the other parts of the reinforcement soil layer 3 is not inclined, but is formed in the vertical direction.

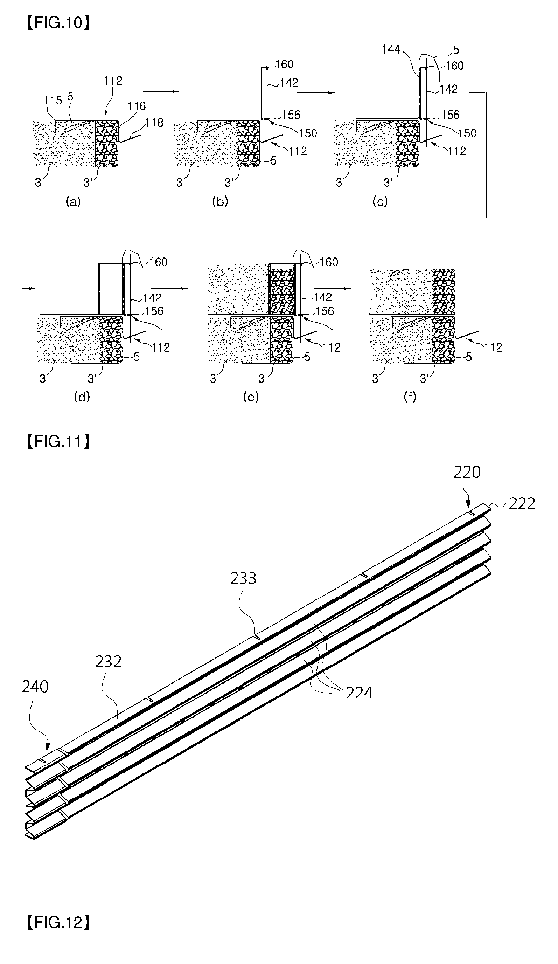

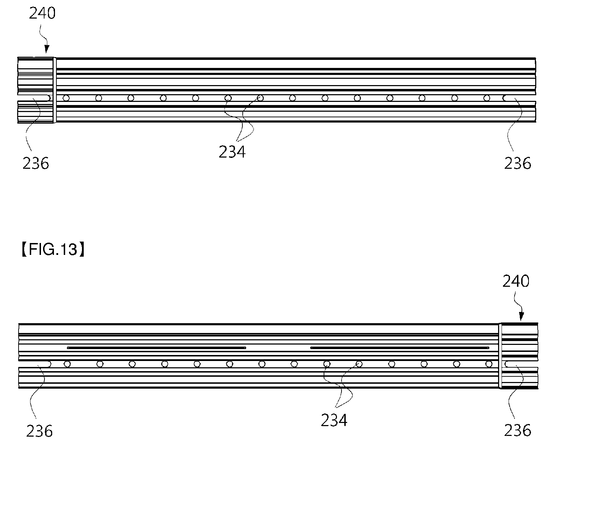

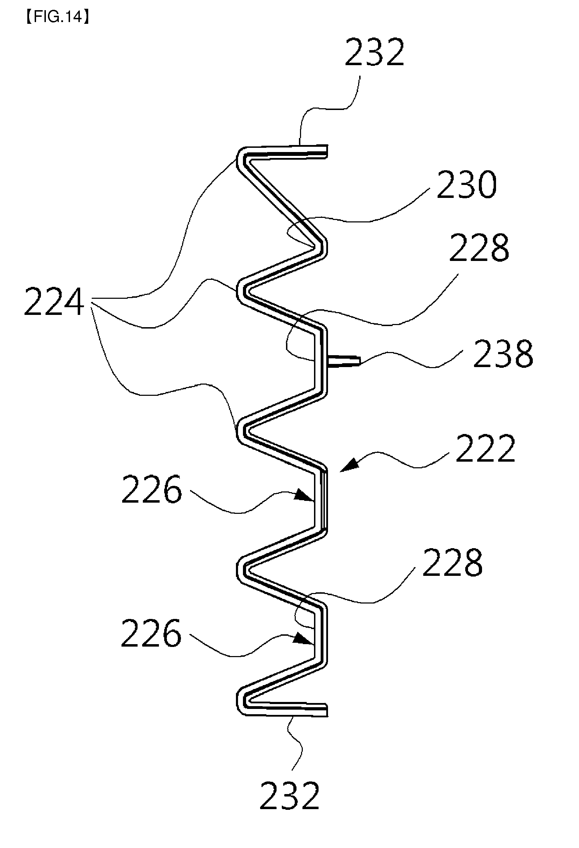

FIGs. 11-15 illustrate an embodiment of a support plate, which constitutes the present invention, in detail. In the drawings, another example of the support plate 220, which is supported on the support unit 12, is disclosed. When the vertical wall is viewed from the front, a number of support plates 220 are installed in a row in the leftward/rightward direction, and a number of such rows are installed at a predetermined interval in the upward/downward direction of the vertical wall.

Each support plate 220 has its framework formed by a support plate body 222, which is obtained by injection-molding of a synthetic resin material. In terms of its top view, the support plate 220 has such a rectangular shape that its length in the leftward /rightward direction is larger than the width in the forward/backward direction.

The support plate body 222 has protrusions 224 and recesses 226 formed on its upper surface so as to reach both ends in the leftward/rightward direction. The protrusions 224 and the recesses 226 are formed alternately. The protrusions 224 are parts of the upper surface of the support plate body 222, which relatively protrude, while the recesses 226 are parts relatively recessed. For reference, the protrusions 224 and the recesses 226 have the opposite shapes on the lower surface of the support plate body 222. That is, the protrusions 224 on the upper surface correspond to recesses on the lower surface, and the recesses 226 on the upper surface correspond to protrusions on the lower surface.

The bottom surfaces of the recesses 226 include planar portions 228, which have a planar shape, and a trough portion 230, which has the shape of a narrow valley. The trough portion 230 is formed by a protrusion 224, which corresponds to the front end of the support plate body 222, and the next protrusion 224. Such existence of the trough portion 230 reduces the distance between the adjacent protrusions 224 and increases the strength of the support plate body 222 at that part, thereby minimizing bending.

The support plate body 222 has skirt portions 232 formed along width-direction front and rear ends, respectively. The skirt portions 232 extend from upper ends of the protrusions 224 to lower portions, respectively. The skirt portions 232 are formed in such a manner that their virtual extension surface is perpendicular to a virtual extension surface of the planar portions 228. It is recommended that the skirt portions 232 have the same height as that of the protrusions 224.

One of the skirt portions 232 is provided with front end fastening slots 233. Together with lower end fastening slots 239 formed on engaging ribs 238 (described later), the front end fastening slots 233 are adapted to fix a geogrid or mesh 46, which prevents vegetation soil 40 from falling off the support plate body 222. A number of front end fastening slots 233 are formed at a predetermined interval, and components, such as screws, are coupled to the front end fastening slots 233 to fix the geogrid or mesh 46.

One of the planar portions 228 of the support plate body 222 has a number of irrigation through-holes 234 formed therein. The vertical supply tubes 30, which are adapted to supply the vegetation soil 40 with water, extend through the irrigation through-holes 234. A number of irrigation through-holes 234 are formed along a single planar portion 228, but the present invention is not limited to this.

Irrigation through-hole openings 236 are formed on both ends of the support plate body 222 and elongated in the longitudinal direction of the support plate body 222 so as to reach both ends of the support plate body 222. The irrigation through-hole openings 236 are adapted to allow the vertical supply tubes 30 to extend through them when adjacent support plates 220 are overlapped. Particularly, the irrigation through-hole openings 236 are elongated so that, when adjacent support plates 220 are overlapped, a space through which the vertical supply tubes 30 can extend is secured easily. It is recommended that the irrigation through-hole openings 236 have approximately the same length as that of overlapping stepped portions 240 (described later).

The support plate body 222 has engaging ribs 238 formed on its lower surface. The engaging ribs 238 are elongated in the longitudinal direction of the support plate body 222, and protrude from the lower surface of the support plate body 222 by a predetermined height. According to the present embodiment, two separate engaging ribs 238 are formed without spanning the entire length of the support plate body 222. The engaging ribs 238 can also be formed throughout the entire length of the lower surface of the support plate body 222. The engaging ribs 238 are provided with lower end fastening slots 239. According to the present embodiment, each engaging rib 238 is provided with two lower end fastening slots 239. As in the case of the upper end fastening slots 233, the geogrid or mesh 46 engages with the lower end fastening slots 239.

The position of formation of the engaging ribs 238 is biased from the middle of the forward/backward width of the support plate body 222 towards the front end. This is for the purpose of increasing the space formed between the geogrid or mesh 46, which is fixed to the engaging ribs 238, and the vertical wall.

The support plate body 222 has an overlapping stepped portion 240 formed on an end thereof. The overlapping stepped portion 240 is a stepped portion formed on an end of the support plate body 222. The stepped portion has a height difference as large as the thickness of the support plate body 222 so that, when two adjacent support plates 220 are overlapped, both ends of the two support plates 220 have no height difference. Such existence of the overlapping stepped portions 240 guarantees that, even when a number of support plates 220 are overlapped and installed in a row, other parts than the overlapping stepped portions 240 have the same overall height.

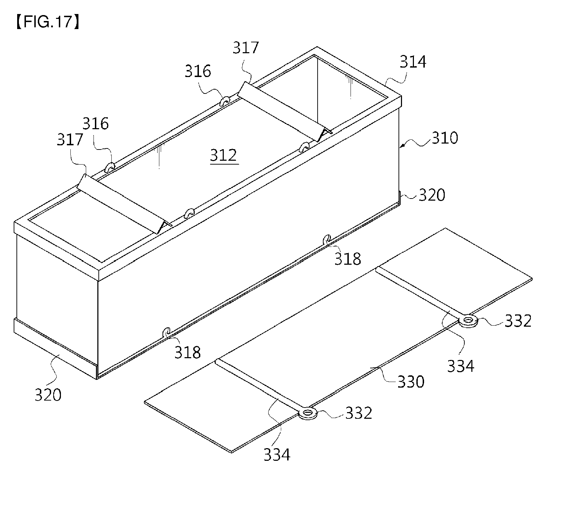

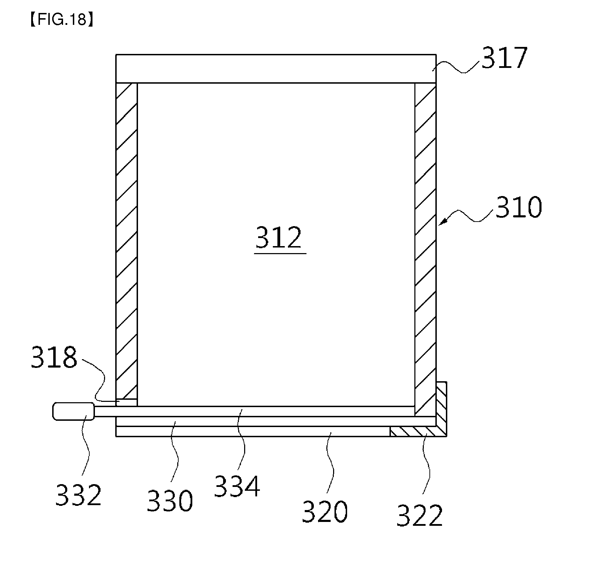

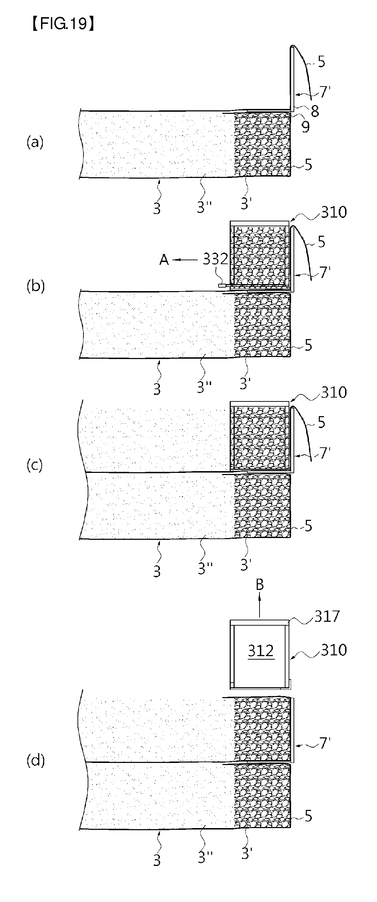

Formation of a water-permeable portion 3' using an aggregate container will now be described with reference to FIGs. 16-19. The aggregate container has a body 310 defining its framework. According to the present embodiment, the body 310 has the shape of a hexahedron elongated in the leftward/rightward direction. With reference to FIG. 16 or 17, the leftward/rightward dimension of the body 310 is defined as its length, and the forward/backward dimension as its width. The length of the body 310 is substantially larger than the width in the forward/backward direction, and the width in the forward/backward direction corresponds to the width of a water-permeable portion 3' (refer to FIGs. 1 and 19) to be formed. The height of the body 310 is approximately equal to the height of a reinforcement soil layer 3 (refer to FIGs. 1 and 19). An aggregate space 312 is formed inside the body 310. The aggregate space 312 is open to the top and bottom of the body 310.

The body 310 must provide at least a predetermined level of strength, and use of a steel plate for it is recommended. However, a synthetic resin or any other material can be used as long as the desired level of strength is provided. The body 310 does not necessarily have a completely hexahedral shape. For example, the body 310 can have an outer surface which is convex or concave.

The body 310 has a reinforcement bar 314 along its upper edge. The reinforcement bar 314 can be made separate from the body 310 and then fixed to it. Alternatively, the reinforcement bar 314 and the body 310 can be made integrally. The reinforcement bar 314 is adapted to reinforce the upper entrance of the body 310. According to the present embodiment, the reinforcement bar 314 extends throughout the entire upper edge of the body 310.

The body 310 has a number of connection engagement units 316 on its upper end. According to the present embodiment, a total of four connection engagement units 316 are provided. The connection engagement units 316 are used to lift the body 310 with a crane, for example. At least two connection engagement units 316 are preferably positioned along each of both longitudinal ends of the body 310 at a predetermined interval. Such installation of at least two connection engagement units 316 along each of both longitudinal ends of the body 310 is for the purpose of easily balancing the body 310 when it is moved with a crane or other heavy equipment. The connection engagement units 316 have a semi-circular shape, but can also have a ring shape.

The body 310 has body reinforcement bars 317 installed across it, i.e. in the width direction. Both ends of the body reinforcement bars 317 are coupled to the body 310. The body reinforcement bars 317 have an L-shaped cross section. The body reinforcement bars 317 are not necessarily used. For example, when the body 310 has sufficient width-direction strength, the body reinforcement bars 317 can be omitted. However, when the body 310 has at least a predetermined size so as to form a large area of water-permeable portion 3', the body reinforcement bars 317 are necessary.

The body reinforcement bars 317 can be installed on the upper end of the body 310 in the longitudinal direction. However, such installation of the body reinforcement bars 317 makes it difficult to fill the aggregate space 312 with aggregates. The body reinforcement bars 317 can be installed on corners on the upper end of the body 310, which correspond to each other, respectively. Such installation of the body reinforcement bars 317 on the corners of the body 310 makes it very easy to fill the aggregate space 312 with aggregates.

The body 310 has interference avoidance portions 318 formed on lower ends of a surface of the body 310, specifically its front surface in the drawings. The interference avoidance portions 318 are formed by cutting out one side of the body 310 in a semi-circular shape, in order to avoid interference with reinforcement bars 334 of a bottom plate 330 (described later). It is recommended that the interference avoidance portions 318 have a minimum area. This is for the purpose of preventing aggregates from flowing out through the interference avoidance portions 318. The shape and area of the interference avoidance portions 318 are equal to or slightly larger than the cross-sectional shape and area of the reinforcement bars 334.

The body 310 has guide rails 320 on both lateral edges of the lower end of the body 310, which correspond to both leftward/rightward ends of the body 310. The guide rails 320 have an L-shaped cross section. The guide rails 320 are adapted to support both ends of a bottom plate 330 (described later). That is, edges of the bottom plate 330 are engaged and supported on the guide rails 320.

The body 310 has a support rail 322 on a lower edge lying opposite the lower edge, on which the avoidance interference portions 318 are formed, so as to connect end portions of the guide rails 320. The support rail 322 is adapted to support an edge of the bottom plate 330. A clearance is formed between sides of the guide rails 320 and the support rail 322 and the lower end of the body 310 so that the bottom plate 330 can be inserted. The clearance corresponds to the thickness of the bottom plate 330.

The lower side of the aggregate space 312, which is open to the lower end of the body 310, is sealed by the bottom plate 330. The bottom plate 330 is adapted to seal the aggregate space 312 from below the body 310 when the body 310 is filled with aggregates and moved. The bottom plate 330 has the shape of a rectangular plate. The bottom plate 330 is made of metal or synthetic resin that can secure at least a predetermined level of strength.

The bottom plate 330 is provided with hooks 332. The hooks 332 are positioned on the bottom plate 330 so as to correspond to the interference avoidance portions 318 of the body 310. The hooks 332 have a ring shape according to the present embodiment, but the shape is not limited to that. The hooks 332 are used to separate the bottom plate 330 from the body 310 or to fasten the bottom plate 330 to the lower surface of the body 310. Particularly, wires or ropes are tied to the hooks 332 and then pulled to separate the bottom plate 330 from the body 310 or fasten the bottom plate 330 to the lower surface of the body 310. In the words, wires or ropes are tied to the hooks 332 and the connection engagement units 316 and then pulled to firmly fix the bottom plate 330 to the body 310.

Reinforcement bars 334 are installed on the bottom plate 330. It is recommended that the reinforcement bars 334 are made integral with the hooks 332. The reinforcement bars 334 are adapted to reinforce the bottom plate 330. The reinforcement bars 334 are positioned on the upper surface of the bottom plate 330 so that, when the bottom plate 330 is installed on the body 310, the reinforcement bars 334 are inside the aggregate space 312. Such installation of the reinforcement bars 334 on the upper surface of the bottom plate 330 is for the purpose of preventing damage to the reinforcement material 5, which is positioned between respective reinforcement soil layers 3, when the water-permeable portion 3' is formed. Therefore, if no reinforcement material 5 is used, the reinforcement bars 334 can be positioned on the lower surface of the bottom plate 330.

Sides of the reinforcement bars 334, which are opposite the sides connected to the hooks 332, extend almost to an edge of the bottom plate 330. Particularly, the sides extend to an edge of the bottom plate 330, which rests on the support rail 322, so that the reinforcement bars 334 are substantially seated on the support rail 322 to effectively support the load of aggregates.

A process of foresting a vertical wall using a preferred embodiment of a method of foresting a vertical wall and an inclined surface according to the present invention, which has the above-mentioned construction, will now be described in detail.

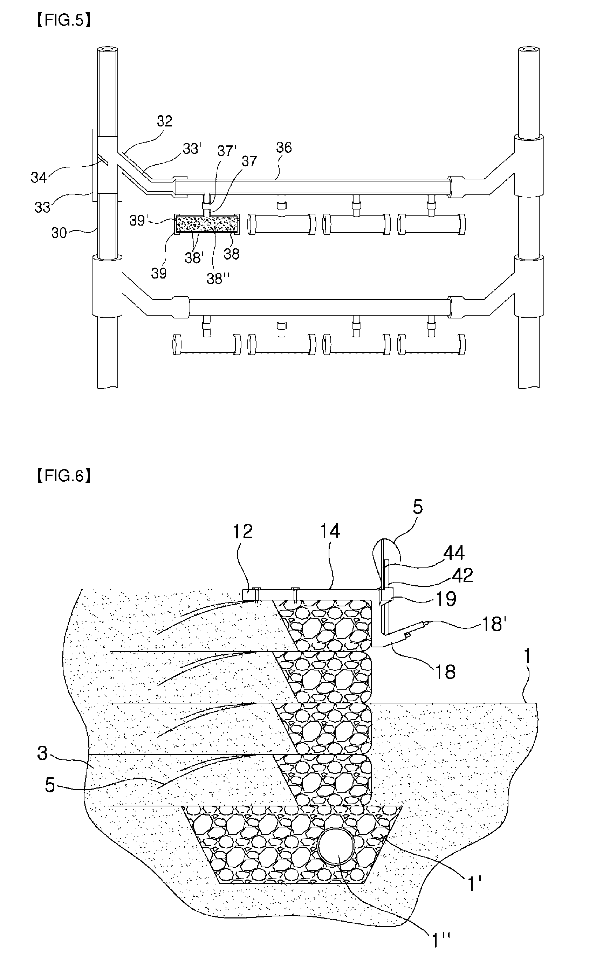

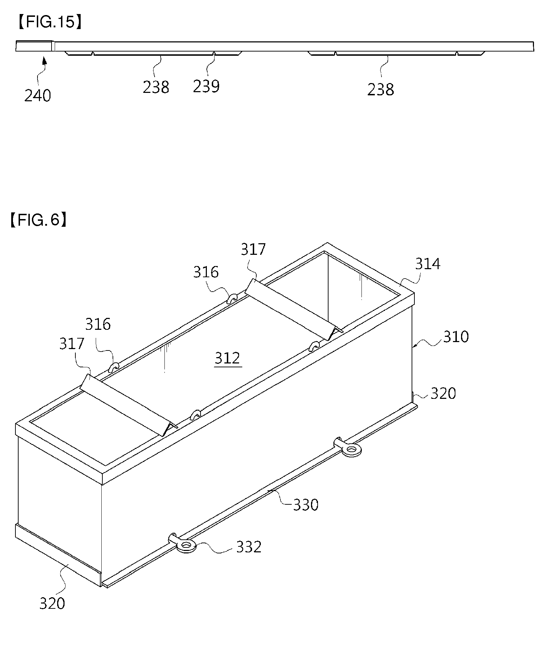

The embodiment shown in FIG. 1 will be described with reference to FIG. 6. Firstly, a rubble base 1' is formed, and a reinforcement material 5 is used to form a number of reinforcement soil layers 3. It is also possible to use the shelf assembly 10 to form reinforcement soil layers 3 starting from the ground surface 1.

The support leg 14 of the support unit 12 is fixed to the reinforcement material 5 of the reinforcement soil layers 3, and a support rod 42 is installed through the rod through-hole 19' of the rod installation portion 19. A vertical plate 44 is installed between the support rod 42 and the position in which a vertical wall 7 is to be formed. The vertical plate 44 has a surface forced against the support rod 42 and a lower end seated and installed on the fixing leg 14. The vertical plate 44 is installed and erected by the support rod 42 and the fixing leg 14, and is used to form the water-permeable portion 3'. The vertical plate 44 is removed after the water-permeable portion 3' is formed. Therefore, the vertical plate 44 is not installed to be coupled permanently. The vertical plate 44 can be coupled to the support rod 42 and fixed. It is recommended that, in this case, wires, for example, are used for temporary coupling, not permanent coupling, so that the vertical plate 44 can be removed after the water-permeable portion 3' is formed.

A reinforcement material 5 is positioned on the uppermost reinforcement soil layer 3. The front end of the reinforcement material 5 is, as shown in FIG. 5, positioned to cover the vertical plate 44 and hang in front of the vertical plate 44.

In this state, the reinforcement soil layer 3 is formed. In forming the reinforcement soil layer 3, the reinforcement soil layer 3 is compacted sufficiently. A water-permeable portion 3' is formed at the front end of the reinforcement soil layer 3 and is adapted to easy downward discharge of water, which is delivered from the highest end of the reinforcement soil layer 3 or from the vegetation soil 40.

After the reinforcement soil layer 3 is formed, a support unit 12 is fixed to the front end of the reinforcement soil layer 3 to install another shelf assembly 10. For reference, it is recommended that the shelf assembly 10 is used every time two reinforcement soil layers 3 are formed. This is for the purpose of avoiding an excessively small distance between vertically adjacent shelf assemblies 10 when the reinforcement soil layer 3 has a height of about 20cm. It is also possible to use the shelf assembly 10 every time one reinforcement soil layer 3 is formed. The vertical plate 44 is separated from the shelf assembly 10, after the corresponding reinforcement soil layer 3 is formed, and then used to form another reinforcement soil layer 3.

After each reinforcement soil layer 3 is formed in this manner, and after the support plate 20 is installed on the support unit 12, a water supply apparatus is installed. It is also possible to install the support plate 20 after the water supply apparatus is installed.

Specifically, the vertical supply tubes 30 are installed vertically by connecting them using branch tubes 32, and a horizontal supply tube 36 is connected to inclined portions 33' of the branch tubes 32 so that the horizontal supply tube 36 connects between the vertical supply tubes 30 on both sides. The horizontal supply tube 36 has water supply tubes 38 connected to it via pressure-reduction valves 37', and the water supply tubes 38 are positioned near the upper surface of the support plate 20.

After the water supply apparatus is installed in this manner, vegetation soil 40 is placed on the support plates 20 of the shelf assemblies 10. The vegetation soil 40 fills the space between the support plates 20, as shown in FIG. 1. When the vegetation soil 40 fills up to the front ends of the support plates 20, only the front-end portions of the support plates 20 are visible to the outside, as shown in FIG. 1. The vegetation soil 40 includes plants or seeds, which sprout and grow for the purpose of forestation.

When the vegetation soil 40 is positioned on the support plates 20, the load of the vegetation soil 40 acts on the support legs 18 and generates a moment. The load support units 16, which are forced against the vertical wall 7, support the load acting on the support legs 18. Therefore, the vegetation soil 40 is supported on the support plates 20 more stably.

A geogrid or mesh 46 is fixed to the fixing protrusions 18' and installed on the support plates 20, which are filled with the vegetation soil 40, as shown in FIG. 1. The geogrid or mesh 46 is adapted to prevent the vegetation soil 40 from separating from and falling off the support plates 20.

After the construction is finished, water can be supplied continuously through the vertical supply tubes 30. Water collected at the water supply unit 27 is delivered to the vertical supply tubes 30. A part of the water delivered to the vertical supply tubes 30 flows to a horizontal supply tube 36 through the inclined portions 33' of the branch tubes 32, and the remainder flows down further and is delivered to another horizontal supply tube 36. Water is delivered to each horizontal supply tube 36 in this manner.

Water delivered to the horizontal supply tube 36 passes through the pressure-reduction valves 37', which adjusts the pressure to a specific value, and is delivered to the water supply tubes 38. Water delivered to the water supply tubes 38 is absorbed by the filler 38" and is discharged slowly out of the water supply tubes 38 through the dripping holes 38' to be delivered to the vegetation soil 40.

Water delivered to the vegetation soil 40 can be supplied to plants growing on the vegetation soil 40, meaning that, unless a persistent drought occurs, plants can be supplied with sufficient water solely from natural rainfalls.

Various alien substances can be delivered to the water supply unit 27 from the outside. The outlet 27e of the water supply unit 27 only receives water that has passed through the supply water-permeable portion 29 installed in the frame 28. The supply water-permeable portion 29 is inclined towards a portion of the water supply unit 27, which corresponds to the center line in the water flow direction, so that alien substances are easily washed away from the surface of the supply water-permeable portion 29 by the flow of water, thereby guaranteeing that the movement of water to the outlet 27e is not disturbed.

A process of forming a reinforcement soil layer 3 using a support unit 112 shown in FIG. 7 will now be described with reference to FIGs. 9 and 10.

Support units 112 are seated on the front end of a reinforcement soil layer 3. A number of support units 112 are installed at a predetermined interval along the front end of the reinforcement soil layer 3. The load support units 116 of the support units 112 are forced against the front-end surface of the reinforcement soil layer 3. The fixing pins 115 of the support units 112 are stuck deeply into the reinforcement soil layer 3 through the reinforcement material 5.

Next, as clearly shown in (a) of FIG. 10, the support rod fixing unit 150 is fixed to the reinforcement soil layer 3. The support rod fixing unit 150 is fixed by inserting the fixing insertion portions 154 on the rear end of the frame 152 into the reinforcement soil layer 3. A number of support rod fixing units 150 are installed at a predetermined interval along the front end of the reinforcement soil layer 3. This state is shown in (b) of FIG. 10. In this state, a reinforcement material 5 is spread on the reinforcement soil layer 3. In order to prevent damage to the reinforcement material 5 when the water-permeable portion 3' is formed, a piece of non-woven fabric, for example, is added to spread two layers of reinforcement material 5. The front end of the reinforcement material 5 is, as shown in the drawings, extends across the upper end of the first vertical plate 144.

Next, a support rod 142 is installed through the upper rod support rings 160 and the lower rod support rings 156 of the support rod fixing units 150. The support rod 142 has an engaging fork 142' on its lower end so as to be engaged and supported on the support leg 118 of the support unit 112. After the support rod 142 is installed at the support rod fixing units 150, the first vertical plate 144 is fixed. This state is shown in (c) of FIG. 10. The first vertical plate 144 has a surface forced against the vertical bars 158 of the support rod fixing units 150 and a lower end seated and installed on the frames 152 of the support rod fixing units 150. The first vertical plate 144 and the support rod 142 can be temporarily coupled using wires, for example, not permanently coupled.

After the first vertical plate 144 is installed, a second vertical plate 144' is installed by connecting it to the first vertical plate 144 using a connection tie 162. For reference, when the first and second vertical plates 144 and 144' are connected by a connection tie 162, the first and second vertical plates 144 and 144' can stand on their own. A water-permeable portion 3' is formed between the first and second vertical plates 144 and 144'. This state is shown in (e) of FIG. 10. After the reinforcement soil layer 3 and the water-permeable portion 3' are completed in this manner, the support rod fixing units 150, the support rod 142, and the first and second vertical plates 144 and 144' are removed.

The next reinforcement soil layer 3 and water-permeable portion 3' are formed. Specifically, two reinforcement soil layers 3 are formed one after the other. After formation of the reinforcement soil layer 3, including the water-permeable portion 3', the water-permeable portion 3' is surrounded by a reinforcement material 5, and the front end is fixed by burying it into the reinforcement soil layer 3. This state is shown in (f) of FIG. 10.

After the reinforcement soil layer 3 is completed as shown in (f) of FIG. 10, a support unit 112 is again installed, as shown in (a) of FIG. 10, to repeat the above-described process and form another reinforcement soil layer 3.

The support plates 220 are installed and supported on the vertical wall by the support units 12. Specifically, a number of support plates 220 are arranged in a row in the leftward/rightward direction so as to have the same height, except for the overlapping stepped portions 240. And, a number of such rows are formed at a predetermined interval in the upward/downward direction of the vertical wall.

Vertical supply tubes 30 are installed through the irrigation through-holes 234 of the support plates 220, which are arranged in leftward/rightward and upward/downward rows, as described above. The vertical supply tubes 30 receive water from the top of the vertical wall and supply the vegetation soil 40 with water so that plants can grow well. The vertical supply tubes 30 are installed through the irrigation through-holes 234. Not every irrigation through-hole 234 necessarily has a vertical supply tube 30 installed through it. That is, the vertical supply tubes 30 can extend through only some of the irrigation through-holes 234.

Vegetation soil 40 is placed on each support plate 220. The vegetation soil 40 fills a space between the lower surface of an overlying support plate 220 and the upper surface of an underlying support plate 220.

The geogrid or mesh 46 is installed to prevent the vegetation soil 40, which fills the space between the overlying support plate 220 and the underlying support plate 220, from falling off due to environments or other various reasons.

Particularly, one end of the geogrid or mesh 46 is fixed to a lower end fastening slot 239 of an engaging rib 238 on the lower surface of the overlying support plate 220. The other end of the geogrid or mesh 46 is then fixed to an upper end fastening slot 233 formed on a skirt portion 232 on the front end of the support plate 220. As a result, the geogrid or mesh 46 prevents the vegetation soil 40, which lies between the vertically positioned support plates 220, from easily escaping from the support plate bodies 222.

Meanwhile, plants grow from the vegetation soil 40, which already contains feeds, which can sprout and forest the vertical wall. Particularly, the vegetation soil 40 lies between the support plates 220, which are continuous in the upward/downward direction of the vertical wall, so that the vegetation soil 40 is positioned throughput the entire vertical wall, from which plants grow accordingly. Such a structure as enabling plants to grow from the vertical wall forests the vertical wall efficiently.

When vegetation soil 40 is placed on the support plate body 222 in this manner, the support plate body 222 has protrusions 224 and recesses 226 elongated in the longitudinal direction throughout the entire support plate body 222, relatively increasing the strength of the support plate body 222, so that the vegetation soil 40 is supported more firmly. Particularly, the existence of a trough portion 230 formed between protrusions 224 on the front end of the support plate body 222 relatively increases the strength of the front end of the support plate body 222. This means that, in the case of a planar portion 228, bending can occur due to a load of the vegetation soil 40 acting on the front end, however, existence of the trough portion 230 guarantees that the load of the vegetation soil 40 is supported at the front end of the support plate body 222 more firmly.

When adjacent support plates 220 are overlapped at the overlapping stepped portions 240, adjacent support plate bodies 222 are not necessarily positioned on the entire overlapping stepped portions 240. This is because of the elongated irrigation through-hole openings 236. Therefore, the worker can vary the degree of overlapping of adjacent support plates 220 according to characteristics of the construction site.

Formation of a water-permeable portion 3' will now be described with reference to FIG. 19. Referring to FIG. 19, a number of reinforcement soil layers 3 are stacked and formed on a ground-cutting portion or a mounded portion so that the front ends of the reinforcement soil layers 3 form a vertical wall or an inclined wall. Each reinforcement soil layer 3 includes a soil portion 3", which is obtained by compacting soil, and a water-permeable portion 3', which is obtained by compacting aggregates. The water-permeable portion 3' is, according to the present invention, formed in a position corresponding to the front end of the reinforcement soil layer 3. A reinforcement material 5 is used to surround the reinforcement soil layer 3, and, as the reinforcement material 5, a net of fine mesh or a geogrid is used. The reinforcement material 5 surrounds each reinforcement soil layer 3 to make it more rigid.

Formation of a reinforcement soil layer 3 will now be described with reference to FIG. 19. The aggregate container is moved after filling its aggregate space 312 with aggregates, so that aggregates are placed in a position where a water-permeable portion 3' is to be formed. To this end, the bottom plate 330 is installed in the aggregate container to seal the lower end of the body 310.

Particularly, an edge of the bottom plate 330, which lies opposite the hooks 332, is inserted into the lower portion of the body 310. Both ends of the bottom plate 330 are supported and guided along the guide rails 320, which are positioned on lower sides of both leftward/rightward ends of the body 310. After the bottom plate 330 is fully inserted into the body 310, an edge of the bottom plate 330 is supported on the support rail 322 installed on an edge of the lower-end portion of the body 310.

Wires or ropes are tied to the hooks 332 and then pulled so that an edge of the bottom plate 330, on which the hooks 332 exist, is forced against the lower end of the body 310. It is unnecessary to pull the hooks 332, obviously, if the bottom plate 330 has such a sufficient level of strength that it can be forced against the lower portion of the body 310 without pulling the hooks 332 with wires, for example.

After the bottom plate 330 seals the lower portion of the aggregate space 312 from below the body 310 in this manner, the aggregate space 312 is filled with aggregates. After the aggregate space 312 is fully filled with aggregates, the body 310 is moved to a desired location. That is, a number of aggregate containers are filled with aggregates at a storage yard, for example, and simultaneously moved to a desired location by a truck, for example.

After the aggregate containers are moved to a location at which reinforcement soil layers 3 are to be formed, wires or ropes are fixed to the connection engagement units 316, and a crane or other heavy equipment is used to lift and move the aggregate containers.

Formation of the reinforcement soil layer 3 will be described briefly. The reinforcement soil layer 3 is made by initially spreading a reinforcement material 5 and then forming a soil portion 3" and a water-permeable portion 3' thereon. After a reinforcement soil layer 3 is formed, the reinforcement material 5 is spread again, and another reinforcement soil layer 3 is formed thereon. The reinforcement material 5 surrounds the water-permeable portion 3' at the front end of the reinforcement soil layer 3 so as to cover a part of the upper surface of the reinforcement soil layer 3, i.e. the upper surface of the water-permeable portion 3' and a part of the soil portion 3". In this state, a new reinforcement material 5 is spread over the completed reinforcement soil layer 3, and a new reinforcement soil layer 3 is formed. The front end of the spread reinforcement material 5 has, as shown in (a) of FIG. 4, a length large enough to sufficiently surround the front molding frame 7'.

The front molding frame 7' helps formation of the front end of the reinforcement soil layer 3, i.e. the water-permeable portion 3', and includes a front plate 8 having the shape of a rectangular plate and a fixing leg 9 protruding in a direction perpendicular to an edge of the front plate 8. The front plate 8 is adapted to support aggregates and the reinforcement material 5 during formation of the water-permeable portion 3'. The fixing leg 9 is adapted to fix the front molding frame 7' to the reinforcement soil layer 3.

The aggregate container is, when forming a vertical wall, preferably formed at the front end of the reinforcement soil layer 3. When each reinforcement soil layer 3 is formed one after another, the aggregate container is positioned at a location where the front end of a specific reinforcement soil layer 3 is to be formed. Particularly, as shown in (b) of FIG. 19, the aggregate container is positioned at the front end of the reinforcement soil layer 3 at which the front molding frame 7' is installed. In this state, the hooks 332 are pulled in the direction of arrow A to separate the bottom plate 330 from the body 310. As a result, the aggregates that have been inside the aggregate space 312 of the body 310 are placed on the reinforcement material 5 of the reinforcement soil layer 3. The reinforcement bars 334 are on the upper surface of the bottom plate 330 so that the reinforcement material 5 is not damaged.

Next, the other areas than the portion where the body 310 exists are filled with soil. The soil is used to form a soil portion 3". The soil portion 3", which is filled with soil, is shown in (c) of FIG. 19.

After the soil portion 3" is fully filled with soil, the body 310 is removed. Particularly, as shown in (d) of FIG. 19, wires or ropes are connected to the connection engagement units 316 of the body 310, and the body 310 is pulled in the direction of arrow B. As a result, the aggregates inside the body 310 remain, but the body 310 itself is removed.

In this state, the reinforcement material 5, which reaches the front side of the front molding frame 7', is fixed so as to cover the water-permeable portion 3' and the front-end upper surface of the soil portion 3", and pressure is applied to the aggregates and soil to compact them. After the level of compaction of the aggregates and soil reaches a predetermined level, the front molding frame 7' is separated to complete a reinforcement soil layer 3.

Next, the front molding frame 7' is installed again, and the above-described process is repeated to form another reinforcement soil layer 3. In this case, the water-permeable portion 3' can be formed using aggregates that have previously been moved in the aggregate container.

It is obvious that the scope of the present invention is not limited by the above-described embodiments, but is defined by the accompanying claims, and those skilled in the art pertaining to the present invention can make various changes and modifications within the scope defined by the claims.

For example, the support plate 20 does not necessarily have a corrugated portion 22. If the support plate 20 has sufficient strength to be supported by the support unit 12, the corrugated portion 22 can be omitted.

Furthermore, a water supply apparatus is installed inside the vegetation soil 40 so that water is delivered from the water supply unit 27 to the vegetation soil 40 according to an embodiment of the present invention, but this construction is not mandatory. If the surroundings give sufficient water supply to the vegetation soil 40, for example, the water supply apparatus can be omitted.

## Claims

1. A shelf assembly comprising:
at least one pair of support units comprising fixing legs fixed to a reinforcement soil layer, load support units extending from front ends of the fixing legs in a gravitational direction to be forced against a vertical wall or an inclined surface, and support legs extending from front ends of the load support units to support a support plate; and
a support plate supported on the support legs of the support units, vegetation soil being seated on the support plate, wherein
interference avoidance portions are formed by cutting out portions of both ends of the support plate, and the support plate is corrugated in a direction perpendicular to a direction of connection between the support units.

2. The shelf assembly as claimed in claim 1, wherein the support plate has a rectangular plate shape and has water through-holes formed in a row.

3. The shelf assembly as claimed in claim 1, wherein rod installation units are positioned on the front ends of the fixing legs of the support units, and the rod installation units have rod through-holes formed in a direction of extension of the load support units so that a support rod can extend through the rod through-holes.

4. The shelf assembly as claimed in any one of claims 1-3, wherein fixing protrusions are formed on a front end and a lower middle portion of each support leg, respectively.

5. The shelf assembly as claimed in claim 4, wherein the support legs extend from the front ends of the load support units to be inclined in an opposite gravitational direction.

6. A method of foresting a vertical wall and a highly-inclined surface, comprising the steps of:
fixing a vertical plate by fixing a support unit of a shelf assembly in a position corresponding to a front end of a reinforcement soil layer to be formed and installing a vertical plate to be supported by a support rod extending through a rod through-hole of a rod installation unit formed on the support unit;
forming a reinforcement soil layer so that a portion, on which the vertical plate has been installed, becomes a front end of the reinforcement soil layer;
seating a support plate on a support leg of the support unit after the reinforcement soil layer is formed; and
placing vegetation soil on the support plate so that plants can grow.

7. The method as claimed in claim 6, further comprising a step of installing a water supply apparatus by installing vertical supply tubes through the support plate, installing a horizontal supply tube having water supply tubes near an upper surface of the support plate, and connecting both ends of the horizontal supply tube with the vertical supply tubes, before/after the step of seating the support plate.

8. The method as claimed in claim 7, further comprising a step of fixing vegetation soil by fixing and installing a geogrid or mesh to fixing protrusions formed on a front end and a lower middle portion of the support leg of the support unit, respectively, after placing vegetation soil on the support plate.

9. The method as claimed in claim 8, wherein, when each reinforcement soil layer is formed, a water-permeable portion is formed at a front end of each reinforcement soil layer corresponding to a rubble base formed below a bottommost reinforcement soil layer so that water is delivered to the rubble base.

10. A water supply apparatus for a method of foresting a vertical wall and a highly-inclined surface by forming a number of reinforcement soil layers, installing a shelf assembly comprising a support unit and a support plate at a vertical wall or a highly-inclined surface formed at front ends of the reinforcement soil layers, and placing vegetation soil on the support plate, the water supply apparatus comprising:
a pair of vertical supply tubes installed inside the vegetation soil at a predetermined interval in a vertical direction and adapted to receive water from a water supply unit;
a horizontal supply tube installed in a horizontal direction with both ends connected to inclined portions of branch tubes provided on the vertical supply tubes on both sides, respectively, so as to receive water through the vertical supply tubes;
a number of water supply tubes installed on the horizontal supply tube in a position below the horizontal supply tube in a gravitational direction and adapted to supply the vegetation soil with water through dripping holes; and
pressure-reduction valves adapted to reduce pressure of water delivered to the water supply tubes below a predetermined value.

11. The water supply apparatus as claimed in claim 10, wherein each branch tube comprises a vertical portion adapted to connect between upper and lower vertical supply tubes, an inclined portion extending from the vertical portion to be inclined in the gravitational direction and connected to the horizontal supply tube, and a guide plate formed inside the branch tube and inclined towards the inclined portion to guide water to the inclined portion.

12. The water supply apparatus as claimed in claim 11, wherein the pressure-reduction valves are installed on connection tubes adapted to connect between the horizontal supply tube and the water supply tubes.

13. The water supply apparatus as claimed in claim 12, wherein each water supply tube has a number of dripping holes formed in a longitudinal direction on a lowest portion of the water supply tube in the gravitational direction, both ends of the water supply tube are sealed by caps, and air holes are formed on the caps.

14. The water supply apparatus as claimed in claim 13, wherein the water supply tubes, the vertical supply tubes, and the horizontal supply tube are filled with a filler so that water is held and then discharged.

15. The water supply apparatus as claimed in any one of claims 10-14, wherein the water supply unit has the shape of a channel through which rainfalls can flow, and a supply water-permeable portion is formed on a portion of the water supply unit, on which an outlet is formed, to transmit water inside a frame so that only water is delivered to the outlet.

16. The water supply apparatus as claimed in claim 15, wherein the frame comprises a first lateral plate adapted to contact an inner wall surface of the water supply unit, on which the outlet is formed, and a second lateral plate connected to the first lateral plate via a connection bar and positioned on an intermediate portion of the water supply unit; the first lateral plate protrudes further than both ends of the second lateral plate with reference to the connection bar; and the first and second lateral plates are inclined to become gradually lower towards both ends so that the supply water-permeable portion is formed between the first and second lateral plates.

17. A shelf assembly comprising:
at least one pair of support units comprising fixing legs having fixing pins inserted into a reinforcement soil layer to be fixed to the reinforcement soil layer, load support units extending from front ends of the fixing legs in a gravitational direction to be forced against a vertical wall or an inclined surface, and support legs extending from front ends of the load support units to support a support plate; and
a support plate supported on the support legs of the support units, vegetation soil being seated on the support plate, wherein
the fixing pins are inserted into the reinforcement soil layer by extending from front ends of pin connection portions, which extend from the fixing legs in such directions that the pin connection portions become far from each other, in a direction perpendicular to a direction of extension of the pin connection portions.

18. The shelf assembly as claimed in claim 17, wherein the support legs have connection legs extending from front ends of the load support units to be inclined in an opposite gravitational direction, the connection legs have the same inclination angle as the support legs, the connection legs are shorter than the support legs, and the connection legs become farther from the support legs towards front ends.

19. The shelf assembly as claimed in claim 18, wherein the support units are formed by bending and connecting two metal rods.

20. The shelf assembly as claimed in any one of claims 17-19, wherein the support plate has a rectangular plate shape, water through-holes are formed in a row on the support plate, interference avoidance portions are formed by cutting out portions of both ends of the support plate, and the support plate is corrugated in a direction perpendicular to a direction of connection between the support units.

21. A method of foresting a vertical wall and a highly-inclined surface, comprising the steps of:
installing a support rod by installing a support unit of a shelf assembly and a support rod fixing unit in a position corresponding to a front end of a reinforcement soil layer to be formed;
fixing a first vertical plate by installing the first vertical plate using the support rod and the support rod fixing unit;
installing a reinforcement material by spreading the reinforcement material, after fixing the first vertical plate, so that a front end of the reinforcement material straddles the first vertical plate;
installing a second vertical plate to be connected to the first vertical plate;
forming a reinforcement soil layer so that a water-permeable portion is formed between the first and second vertical plates and the second vertical plate becomes a front end of the reinforcement soil layer;
seating a support plate on a support leg of the support unit after the reinforcement soil layer is formed; and
placing vegetation soil on the support plate so that plants can grow.

22. The method as claimed in claim 21, further comprising a step of installing a water supply apparatus by installing vertical supply tubes through the support plate, installing a horizontal supply tube having water supply tubes near an upper surface of the support plate, and connecting both ends of the horizontal supply tube with the vertical supply tubes, before/after the step of seating the support plate.

23. A support plate for a shelf assembly, comprising:
a support plate body having a leftward/rightward length larger than a forward/backward width, the support plate body having protrusions and recesses extending in a longitudinal direction, the protrusions and recesses being positioned alternately in the forward/backward width direction;
an overlapping stepped portion formed on an end of the support plate body so as to have a height difference corresponding to a thickness of the support plate body so that adjacent support body plates can be overlapped; and
an engaging rib formed on a lower surface of the support plate body so as to fix a second end of a geogrid or a mesh, which has a first end fixed to a front end of an underlying support plate body.

24. The support plate for a shelf assembly as claimed in claim 23, wherein bottom portions of the recesses comprise planar portions and trough portions, and a recess between protrusions positioned successively at a front end of the support plate body in the forward/backward width direction has a trough portion.

25. The support plate for a shelf assembly as claimed in claim 24, wherein one of the planar portions of the recesses has a number of irrigation through-holes formed at a predetermined interval so that vertical supply tubes extend through the irrigation through-holes.

26. The support plate for a shelf assembly as claimed in claim 25, wherein irrigation through-hole openings are formed on both ends of the planar portion, on which the vertical supply tubes are formed, respectively, and are elongated to have the same length as the overlapping stepped portion.

27. The support plate for a shelf assembly as claimed in any one of claims 23-26, wherein skirt portions extend downwards from protrusions at front and rear ends of the support plate body in the forward/backward width direction, respectively; the skirt portions have the same height as the protrusions; and the skirt portion at the front end of the support plate body in the forward/backward width direction and the engaging rib have a front end fastening slot and a lower end fastening slot, respectively.

28. The support plate for a shelf assembly as claimed in claim 27, wherein the engaging rib is biased from a center of the forward/backward width of a lower surface of the support plate body towards the front end in the forward/backward width direction.

29. An aggregate container comprising:
a body having an aggregate space formed inside the body to be open upwards/downwards;
at least two pairs of connection engagement units positioned on both sides of an upper end of the body so as to face each other; and
a bottom plate removably installed below the aggregate space of the body to seal a lower portion of the aggregate space and provided with hooks so that wires or ropes are tied to the hooks to separate the bottom plate from the body plate.

30. The aggregate container as claimed in claim 29, wherein the body has the shape of a hexahedron with a leftward/rightward length larger than a forward/backward width, and an upper end reinforcement bar is positioned along an upper end of the body.

31. The aggregate container as claimed in claim 30, wherein guide rails are installed on both longitudinal ends of a lower portion of the body, respectively, to guide and support both ends of the bottom plate, and a support rail is installed along a lateral edge of the body to support an edge of the bottom plate.

32. The aggregate container as claimed in any one of claims 29-31, wherein a body reinforcement bar is positioned on an upper end of the body across an entrance of the aggregate space.

33. The aggregate container as claimed in claim 32, wherein interference avoidance portions are formed on a lateral edge of a lower end of the body, and reinforcement bars are fixed to an upper surface of the bottom plate and positioned to correspond to the interference avoidance portions, the reinforcement bars integrally extending from the hooks.

34. A method of forming a water-permeable portion constituting a reinforcement soil layer using an aggregate container having an aggregate space formed in a body, which forms a framework, to be open upwards/downwards and a bottom plate removably installed below the body to seal a lower portion of the aggregate space, the method comprising the steps of:
spreading a reinforcement material on a bottom and installing a front molding frame at a front end;
positioning an aggregate container, which is filled with aggregates, adjacent to the front molding frame;
separating the bottom plate from the body of the aggregate container;
placing soil at a location on the reinforcement material except for a portion on which the body is positioned;
separating the body from between the front molding frame and the soil;
covering the aggregates, including a part of the soil, with the reinforcement material; and
compacting the soil and aggregates.

35. The method as claimed in claim 34, further comprising a step of removing the front molding frame after compacting the soil and aggregates.
